# EUROPEAN PATENT SPECIFICATION

(11) **EP 0 782 638 B1**
(45) Date of publication and mention of the grant of the patent: **06.12.2000**
(21) Application number: 95933187.7
(22) Date of filing: 20.09.1995
(51) Int. Cl.: D04H 1/46

(54) **PROCESSING METHODS AND PRODUCTS FOR IRREGULARLY SHAPED BICOMPONENT GLASS FIBERS**
VERFAHREN UND PRODUKTE FÜR UNREGELMÄSSIG GEFORMTE BIKOMPONENTGLASFASERN
PROCEDES DE TRAITEMENT ET PRODUITS A BASE DE FIBRES DE VERRE DE FORME IRREGULIERE A DEUX COMPOSANTS

(30) Priority: 21.09.1994 US 310183
(43) Date of publication of application: 09.07.1997
(73) Proprietor: OWENS CORNING, Toledo, Ohio 43659 (US)
(72) Inventor: ALKIRE, Roberta, Lee, Millersport, OH 43646 (US); BRANDON, Ralph, E., Newark, OH 43055 (US); GRANT, Larry, J., Westerville, OH 43081-6347 (US); GREEN, Tod, D., Somerset, OH 43783 (US); HENRY, George, Thomas, Newark, OH 43055 (US); HOUSEHOLDER, Kimberley, A., Pickerington, OH 43147 (US); MILLER, William, Scott, Newark, OH 43055 (US)
(74) Representative: West, Alan Harry
(86) International application number: PCT/US95/12043
(87) International publication number: WO 96/09427

(56) References cited:
- WO-A-95/12553
- US-A- 3 850 601
- US-A- 4 296 164

## Description

The present invention relates to the processing of glass fiber wool and products therefrom, and more particularly, to methods for processing and products made from irregularly shaped glass fibers.

Conventional glass fibers are useful in a variety of applications including reinforcements, textiles, and acoustical and thermal insulation materials. For purposes of this patent specification, in using the terms "glass fibers" and "glass compositions", "glass" is intended to include any of the glassy mineral materials, such as rock, slag, and basalt, as well as traditional glasses.

Continuous glass fibers are typically produced via bushings for reinforcement and textile applications. Such fibers are typically made of many glass filaments held together by sizing. The glass fibers are often further processed by combining them into continuous strands, yarns, and rovings, or by chopping the glass fibers into preselected lengths defined by the end user. Where chopped, the resulting short, straight fiber segments may be mixed with other materials, wet processed into mats such as are used for shingles, or otherwise treated for use. While bushings have significant operational lifetimes, their throughput is limited relative to rotary fiberizing techniques for producing glass fibers.

Short, straight fibers typical of acoustic and thermal insulation materials are made by rotary fiberizing techniques and are interconnected by binders. In such techniques, molten glass is delivered from a furnace to an orificed centrifuge, commonly referred to as a spinner. Fibers produced by the spinner are drawn downward by a blower. A binder, which is required to bond the fibers into a wool product, is sprayed onto the fibers as they are drawn downward. The fibers are then collected and formed into a wool pack. The resulting materials suffer from nonuniform material distribution, the expense of binder, and costs to treat effluent and exhaust air to protect the environment from the impact of organic compounds in the binder.

WO-A-9512553 discloses a glass fiber insulation product comprising irregularly shaped glass fibers of two different glasses having different coefficients of thermal expansion, with the irregularly shaped dual-glass fibers exhibiting a substantially uniform volume filling nature, and providing improved recovering and thermal conductivity abilities even in the absence of a binder material.

In addition to insulation materials, other wool products are produced from the wool pack by further compressing and heat setting the wool into boards or panels. Alternately, the wool may be blended with other natural and synthetic fibers to form nonwoven materials, and thereafter carded or combed to open up the fiber pack for further processing, such as needling. Carding and combing tends to align the fibers. The blended fibers serve both to open the glass fiber matrix and make the glass fibers amenable to needling by "lubricating" the needling action.

Conventional glass fibers, whether continuous, chopped, or in wool packs have found their way into a wide variety of products. It is desirable to further improve the characteristics of products including glass fibers, and to find new uses for glass fibers which take advantage of glass fiber properties.

In accordance with the present invention, an irregularly shaped glass fiber is provided which enjoys improved resiliency, and openness in pack structures. Packs, batts, or other assemblies, generally referred to herein as portions, include irregularly shaped glass fibers which are entangled and require no binder. As set forth in accordance with the present invention, portions of the wool pack having irregularly shaped fibers may be processed directly without intervening steps which are required in conventional glass fiber processing operations. That is, a wool pack of the irregularly shaped glass fibers may be needled without the precursor steps of carding, blending with other fibers, or lubricating, otherwise required with conventional straight glass wools. The openness and resiliency of the irregularly shaped glass fibers further allows the wool fibers to resist abrasion and needling damage by deflection rather than breakage, producing less dust during processing. Nonetheless, the open structure of the irregularly shaped glass fibers improves the ease with which carding and blending operations are performed, when such are desired. Further, irregularly shaped glass fibers produced in accordance with the present invention have a more uniform weight distribution, so that non-woven materials produced by needling exhibit more uniform properties. As a result, a series of articles including irregularly shaped fibers may be produced at lower cost, or processed with less effort, with varied and improved performance characteristics.

Accordingly, the present invention provides a method for producing nonwoven material from irregularly shaped glass fibers according to claim 1. Preferably, the method is performed with irregularly shaped bicomponent glass fibers produced by rotary fiberization, and requires no precursor processing such as carding or blending.

The present invention, thus, provides for a nonwoven material comprised of an needled glass fiber wool including irregularly shaped glass fibers according to claim 20, preferably bicomponent glass fibers unblended with other fibers. Materials including needled, irregularly shaped glass fibers in accordance with the present invention demonstrate not only the high temperature, smoke and chemical resistance of glass, and dimensional stability, but also a resiliency, high loft, resistance to tear, and soft felt-like feel (i.e., soft "hand"). The choice of needles, repetitive needling, needling from one or both sides, and location of needling can vary these characteristics, making numerous product applications possible.

By way of example and not limitation, product applications of the resulting woven and nonwoven materials include use of irregularly shaped glass fiber materials in filtration elements, sorbants, gaskets, packings, shingles, composite structural elements, furnishings, textiles, yarns, and blown-in insulation systems.

Finally, in a further aspect of the present invention, a nonwoven material is provided including irregularly shaped fibers in a generally continuous wool tow. The generally continuous tow is produced by "unwinding" a fiberglass wool pack collected by a direct forming method. In the direct forming method, irregularly shaped glass fibers are collected such that a generally spiral fiber relationship in the veil of fibers is captured and then generally maintained in the wool pack. This generally continuous wool tow may be further processed in numerous ways to form yarns, textiles, packings, reinforcements, and blown-in insulation.

A still further feature of the generally continuous tow is that it may be transported between operating stations through tubes blown or drawn by air movement induced by fans or vacuum.

The production of a generally continuous tow by "unwinding" a fiberglass wool pack collected by a direct forming method may further be applied in a portable blowing wool system comprising a wool pack of irregularly shaped glass fibers collected by direct form methods, which may be unwound and cubed on site, and blown into spaces to be insulated.

Figure 1 is a schematic perspective view of a direct forming method of collecting irregularly shaped glass fibers in accordance with the present invention.

Figure 1A is a schematic view in perspective of an alternative embodiment of the direct forming process of the present invention.

Figure 1B is a schematic view in perspective of the veil of air and long fibers in relation to the first conveyor surfaces.

Figure 1C is a schematic view in perspective of the conveyor surfaces and edge guides of the present invention.

Figure 2 is a schematic perspective view of an irregularly shaped glass fiber in accordance with the present invention.

Figure 3 is a schematic side view of various processing steps performed on a wool pack of irregularly shaped glass fibers in accordance with the present invention.

Figure 4 is a schematic perspective view of a filtration element including needled irregularly shaped glass fibers embodied in a representative panel configuration.

Figure 5 is a schematic perspective view of a filtration element including needled irregularly shaped glass fibers embodied in a representative filter bag configuration.

Figure 6a is a schematic perspective view of a representative gasket including a resilient matrix of needled irregularly shaped glass fibers.

Figure 6b is a schematic perspective view of a representative shingle including a matrix of irregular glass fibers needled to provide different thicknesses.

Figure 7 is a schematic perspective view of a representative structural element having an inner core of irregularly shaped glass fibers.

Figure 8a is a schematic perspective view of a representative texturizing process applied to a mat of irregular glass fibers in accordance with the present invention.

Figure 8b is a schematic cross-sectional view of a texturized mat of irregularly shaped glass fibers.

Figure 9 is a schematic perspective view of a generally continuous tow of irregularly shaped wool fibers being produced from a wool pack collected by direct forming methods.

Figure 10 is a schematic perspective view of a method for making yarn from a generally continuous tow of irregularly shaped wool fibers.

Figure 11 is a schematic perspective view of a generally continuous tow and a distribution system therefor in accordance with the present invention.

Figure 12 is a schematic perspective view of a portable blown-in insulation system in accordance with the present invention.

Figure 13 is a schematic view in elevation of a heat setting process by which the insulation of the present invention may be produced.

Figure 14 is a schematic view in perspective of a direct formed process by which the insulation of the present invention may be produced.

Figure 15 is a schematic view in perspective of an embodiment of the insulation product of the present invention.

Figure 16 is a cross-sectional view in elevation of a fiberizer by which the fibers of the present invention may be produced.

Figure 17 is a plan view of a portion of the spinner of Figure 16, taken along line 17-17.

Figure 18 is a schematic view in elevation of the spinner of Figure 17 taken along line 18-18.

Figure 19 is a schematic cross-sectional view of an irregular glass fiber of the invention having a 50:50 A/B glass ratio.

Figure 20 is a schematic view of an irregular glass fiber having an A/B glass ratio of less than 50:50.

Figure 21 is a schematic view in elevation of the present invention.

Figure 22 is a schematic view in perspective of the preferred embodiment of the present invention.

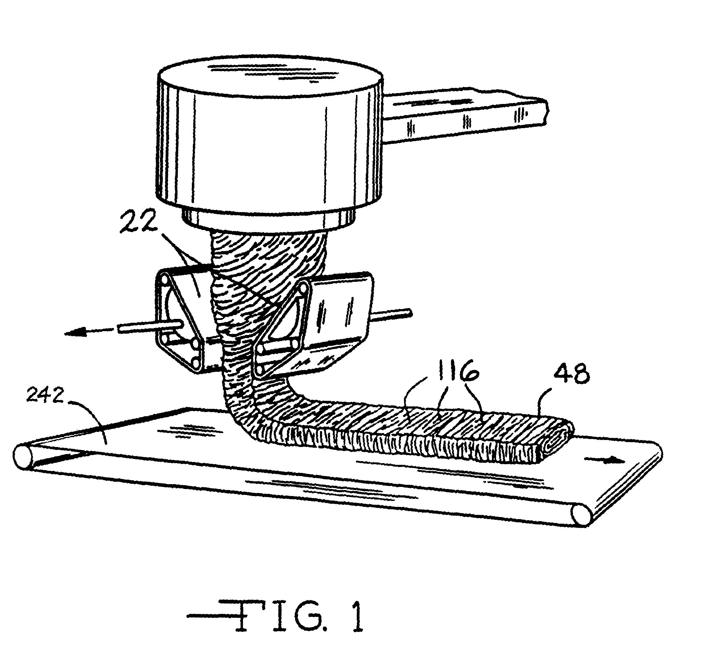

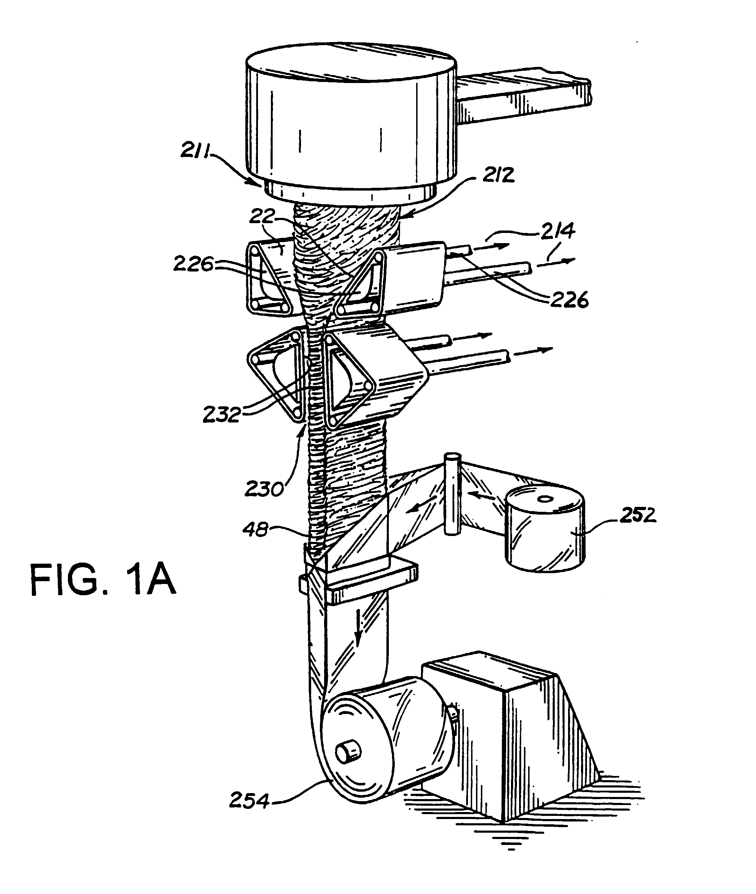

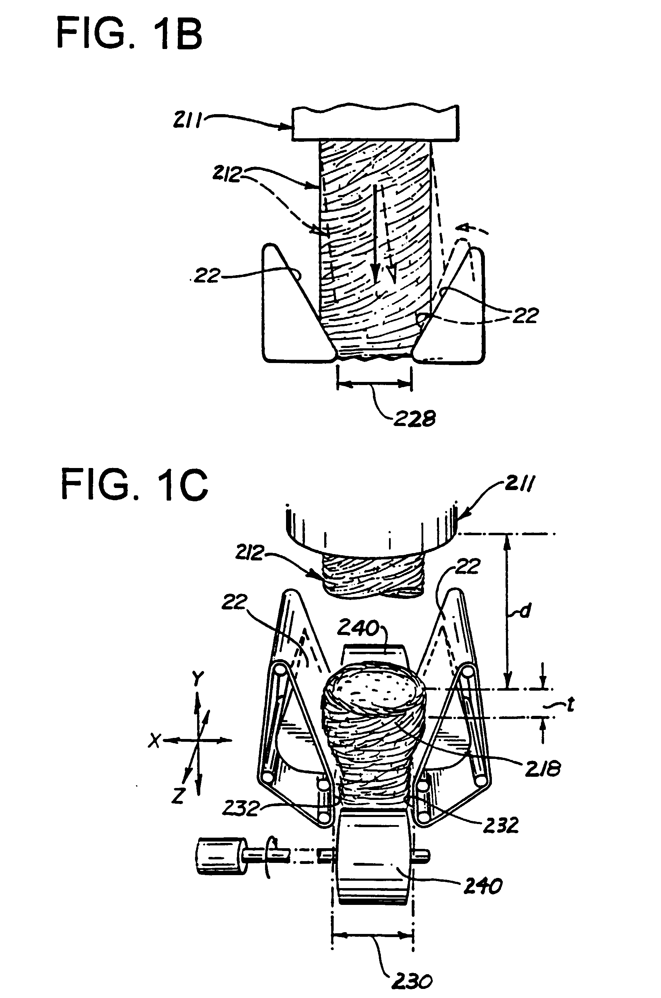

The method of the present invention may be used to process wool packs of irregularly shaped long glass fibers into further products and materials as representatively shown in Figures 1 through 22.

Referring to Figure 1, irregularly shaped glass fibers 116 are provided which enjoy improved resiliency, and openness in pack structures 48. Packs, batts, or other assemblies, generally referred to herein as portions 148, include irregularly shaped glass fibers 116 which are entangled and require no binder. The fiber structure and methods of manufacturing wool packs 48 are set forth in greater detail below.

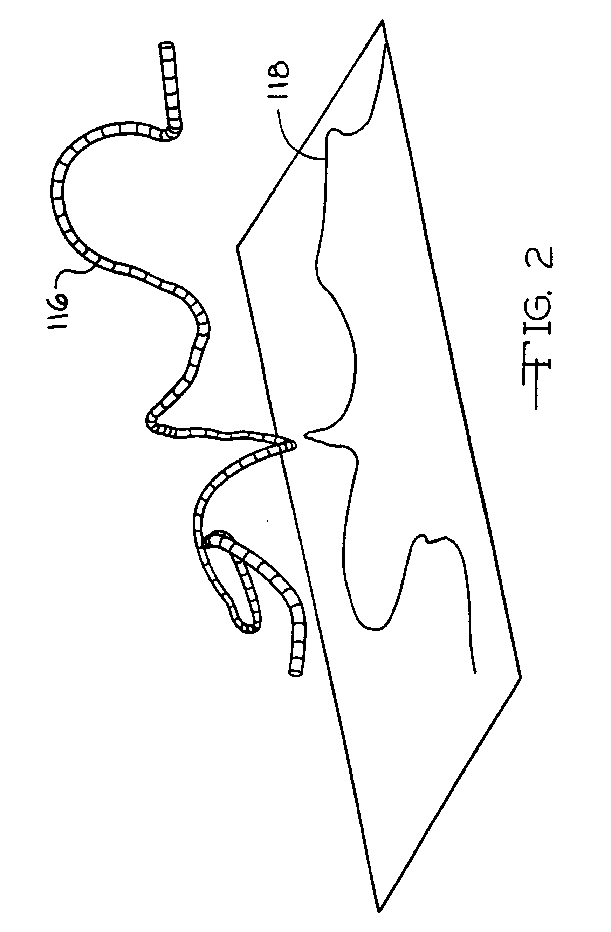

Referring to Figure 1, the preferred process for producing a wool pack 48 (or portion 148) is shown in which long, irregularly shaped glass fibers 116 are collected upon opposing first conveyor surfaces 22. Referred to also as a direct form collection, the preferred process is best disclosed in greater detail below. This method has the benefit of collecting the irregularly shaped fibers 116 with a generally spiral orientation in the wool pack 48. The irregularly shaped long glass fiber 116 is representatively shown in Figure 2 along with its two-dimensional projection shadow 118, which illustrates the irregular shape or rotation along its length.

The preferred method of the present invention may be used to produce wool packs of long glass fibers as representatively shown in Figures 1 through 1C.

Referring to Figures 1 and 1A, it may be seen that the direct forming method for collecting long glass fibers begins with providing a rotary fiberizing apparatus 211, and producing therewith a veil 212 of moving gases 214 and long glass fibers 116. The veil 212 may be also referred to herein as a column. The veil 212 travels in a generally downward direction, with the long fibers 116 therein having a generally spiral trajectory, as indicated generally. The long fibers 116 are captured on at least two opposed first conveyor surfaces 22 with the long fibers 116 generally oriented thereon in a generally spiral relationship. Thereafter, a wool pack 48 of long fibers is formed while generally maintaining their orientation.

Capturing the fibers includes receiving the long glass fibers 116 on the first conveyor surfaces 22, and separating the gases 214 in the veil 212 therefrom by exhausting the gases 214 through the first conveyor surfaces 22. The first conveyor surfaces 22, preferably planar foraminous surfaces, are further operated in downwardly converging directions to convey the long glass fibers 116 thus captured for forming into a wool pack 48. At their downwardmost points, the first conveyor surfaces are separated by a gap 228, shown best in Figure 1B, which leads to a passage 230 formed by second conveyor surfaces 232.

Referring to Figures 1 through 1B, the forming of a wool pack 48 includes forming a passage 230 with at least two second conveyor surfaces 232 in opposed, spaced relationship. The long fibers 116 are conveyed by the first conveyor surfaces 22 into the passage 230, and the wool pack 48 is shaped by its transit through the passage 230. During the step of forming, the general orientation of fibers, i.e. a generally spiral relationship, between the long fibers 116 on the first and second conveyor surfaces 22, 232 is preferably generally maintained by suction through those surfaces. The suction further serves to cool the wool pack, typically reducing the temperature an additional 100 to 200 degrees Fahrenheit (°F) (38 to 93°C), which is significant where packaging follows directly from the direct-forming process, as shown in Figure 1A. However, as shown in Figure 1, the method may also be practiced without applying suction to the second conveyor surfaces 232. The temperature of the wool pack is typically in the range of 204°C to 260°C (400 to 500°F) but can vary therefrom.

Referring now to Figure 1C, it is preferred that the step of forming a passage 230 includes forming a generally rectangular passage, as shown, by positioning at least two opposed edge guides 240 in spaced relationship to generally define the sides of the passage 230.

Various additional steps may be performed in accordance with the present invention to produce desired results in the wool pack directly formed therewith, and thus will vary from product to product. In that regard, referring to Figure 1A, the step of forming may be performed by operating the first conveyor surfaces 22 at a first speed, and operating the second conveyor surfaces 232 at a second speed. Speed differences cause a degree of surface entanglement between the long glass fibers 116, and thus somewhat interrupt the oriented relationship of long fibers near the surface of the wool pack being formed. Greater entanglement which results from greater speed differences provides additional definition to the wool pack, but can produce some loss of recovery. It has been found that approximately equal speeds tend to produce maximum recovery, i.e. where the speed of the first conveyor surface 22 is approximately ¾ to 1½ times the speed of the second conveyor surface 232.

In addition, further steps may be performed down line to provide additional shape or other properties or characteristics to the wool pack 48. In this regard, Figure 1A does not include the third conveyor surface 242 (see Figure 1), but illustratively shows a further step of shaping the wool pack to form a product. As shown, the wool pack 48 can be encapsulated with any suitable type of film, such as film 252. The wool pack may further be cut into individual units, such as insulation batts, prior to packaging. The product can be packaged by any suitable means, such as roll up apparatus 254. Referring to Figure 1A, an insulation batt or roll of long glass fibers directly formed in accordance with the present method is shown. It is understood that the batt or roll can be covered by film 252 or other exterior facing, many of which are known in the art.

Referring again to Figure 1C, it is seen that capturing the long glass fibers may include collecting a stack of fibers, referred to herein as a dynamic stack 218, column or a loaf, where the fibers 116 intercept the first conveyor surfaces 22. A somewhat gentle collection of the fibers is preferred, to avoid densifying the stack 218. The dynamic stack 218 will have a stack thickness, t, which is defined from the top of the stack 218 to first conveyor surfaces 22 approximately vertically therebelow. If the dynamic stack 218 is too high, it becomes difficult to manage and control. Thus, one critical dimension in stack formation is its thickness, t. A second dimension of interest is the distance, d, from the bottom of the rotary fiberizing apparatus 211 to the top of the stack. It is desirable for removal of gases that the distance d be as small as possible to reduce the volume of gas removal. The distance d is desirably chosen so as to minimize interference with the fiberizer process, and thus cannot be too short. As well, if distance d is too short, a higher density stack 218 results. As d increases, the velocity of the veil 212 decreases, so that distance d may be established to capture the long fibers without excessive compaction which destroys openness of the fibers.

Thus, the step of capturing can include controlling the thickness of the dynamic stack 218. It has been found that this may be performed in several ways, or a combination of ways, in addition to varying the distance, d. For example, thickness, t, may be controlled by varying the speed at which the first conveyor surfaces 22 convey the long fibers 116 in a generally converging downward direction. Control of "line speed" is a primary manner of controlling the thickness, t. Another way is by varying the suction through the first conveyor surfaces 22. However, varying the suction can affect fiber compaction, product recovery, uniformity of weight, and rectangularity of cross-section of the wool pack. A third way to control thickness, t, is by varying the angle of at least one of the first conveyor surfaces 22 relative to the generally downward direction of the veil 212. In general, one purpose of placing the first conveyors 22 at an angle is to manage and control the stack 218. However, where the angle of only one surface is varied, a nonuniform stack can result. The gap 228 between the first conveyor surfaces 22 also cooperates with these other factors in controlling stack formation and thickness, t. Finally, thickness t can be affected by varying the speed of third conveyor surface 242.

It has also been noted that the veil 212 may tend to wander slightly in its downward travel to the first conveyor surfaces, and management of the veil 212 is desirable. In this regard, the step of capturing the fibers may further include adjusting the first conveyor surfaces 22 in other ways. Thus, the step of capturing may further include adjusting laterally the position on the first conveyor surfaces 22 at which the dynamic stack 218 is collected. Lateral adjustment in direction may be performed in the x and z directions shown in Figure 1 C, where x is the left-right direction, z is horizontal movement toward and away from the viewer, and y is vertical movement. Adjustment in the x direction also affects the height at which the first conveyor surface 22 intercepts the veil 212, and can either correct or induce nonuniformity in the formation of the stack 218.

As further shown in Figure 1B, a more subtle effect on the travel of the veil 212 may be exerted by varying the suction applied through the first conveyor surfaces, or by varying the angle of at least one first conveyor surface 22 to bring the suction pressure closer to influence the general downward travel of the veil 212. That is, the steeper the first conveyors, the more influence suction has on the veil 212.

In this regard, the width of freely rotatable wheels used as edge guides 240 has been found to have a large impact on the resulting pack shape. With a wheel width of about 127 mm (5 inches) appearing optimal for a gap 228 of generally 178 mm (7 inches) to 330 mm (13 inches). Substantially rectangular wool packs have been formed requiring no further shaping or forming prior to further packaging, as illustratively shown in Figure 1A.

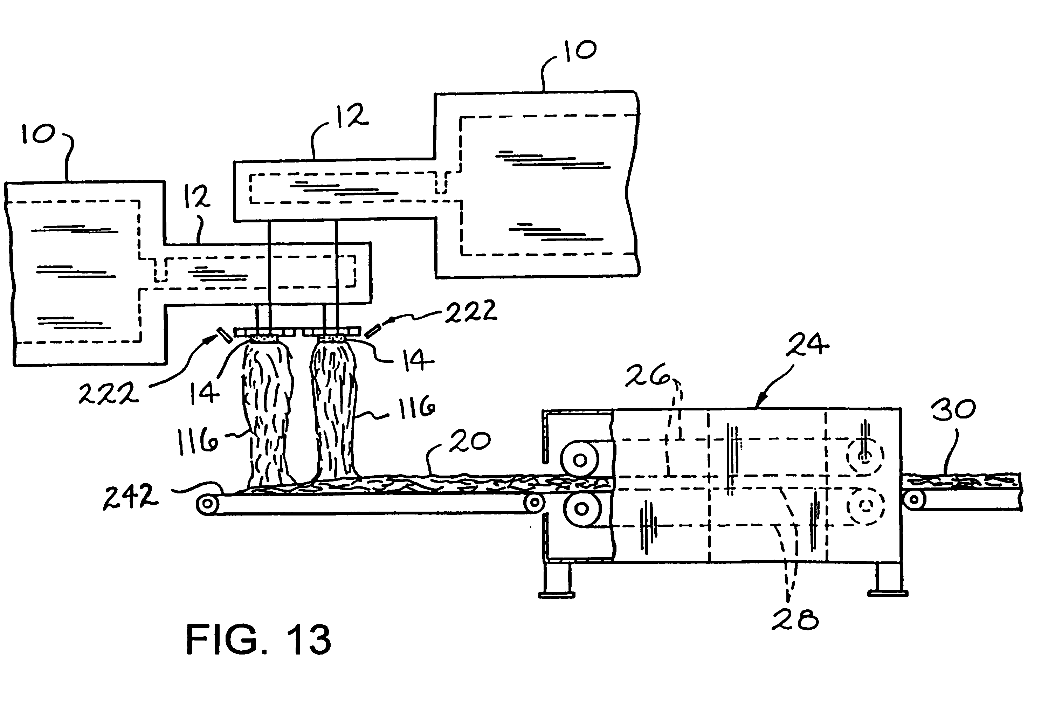

The insulation products of irregularly shaped glass fibers of the present invention can be produced from a rotary fiber-forming pack heat-setting process for wool pack collection as shown in Figure 13. While Figure 1 shows a preferred process for collection, Figure 13 shows an alternate process for wool pack collection.

Referring to Figure 13, it can be seen that two distinct molten glass compositions are supplied from furnaces 10 via forehearths 12 to fiberizers 14. Veils of irregularly shaped glass fibers 116 produced by the fiberizers are collected on conveyor 242 as wool pack 20 by means of a vacuum positioned beneath the conveyor. As the fibers are blown downward by air or gases to the conveyor by means of blowers 222 in the fiberizers, they are attenuated and assume their irregular shape.

The wool pack is then passed through oven 24 at heat setting temperatures from 371°C to 593°C (700 to 1100°F). The heat setting temperature may be achieved either by retarding the cooling process after fiber forming to retain some of the heat from the fiber forming process, or by reheating the fibers in the heat setting oven. While passing through the oven, the wool pack is shaped by top conveyor 26 and bottom conveyor 28, and by edge guides, not shown. While in the oven, the glass fibers may be subjected to flows of hot gases to facilitate uniform heating. After a period of up to 10 minutes, the wool pack then exits the oven as insulation product 30.

When glass fibers are constrained by conveyors 26 and 28 into the shape of the insulation product, the fibers are stressed in the manner of a compressed spring. When the stressed fibers are subjected to heat setting temperatures, the glass structure is relaxed, possibly by a creep mechanism, resulting in the stress being substantially released. Once the constraints are removed, the wool pack does not expand but holds the desired shape. Since the fibers bend as they cool, they become more entangled and enhance the insulation product's structural integrity.

It is to be understood that heat setting is an optional aspect of the present invention. Other optional fabrication techniques for the insulation product include stitching, hydro-entanglement, and encapsulation.

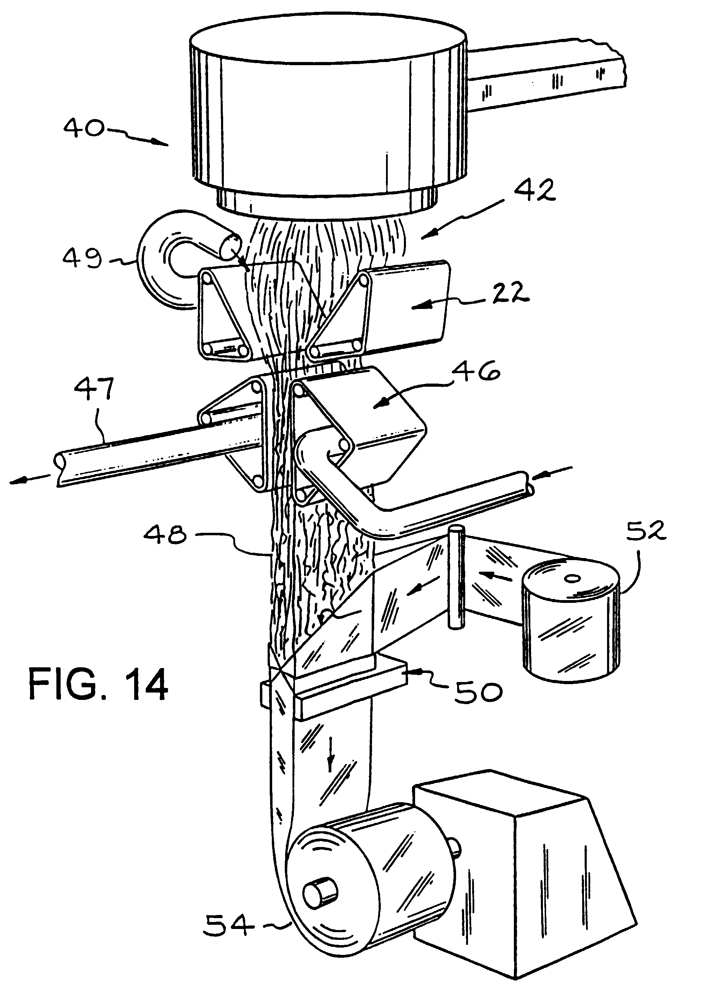

Referring to Figure 14, a novel direct forming process is described through which insulation products of the present invention may be produced. Irregularly shaped glass fibers are produced in fiberizer 40. Veils 42 of glass fibers are blown downward by means of blowers in the fiberizer and are collected at temperatures of up to 593°C (1100°F) on opposed, downwardly converging collection conveyors 22. he collected fibers are passed through a heat-setting oven, such as pack formation and heat setting conveyors 46, where the fibers are shaped into an insulation product at temperatures within the range of from about 371°C to about 593°C (700 to 1100°F). The heat setting oven, or heat setting conveyors, preferably define a predetermined cross-sectional shape. The heat for heat setting the fibers in the oven can be supplied by any suitable means, such as by hot air ducts 47, connected to a supply of hot gases, not shown, which are adapted to pass heated gases transversely through the wool pack 48.

In a particular aspect of the invention the intercepting conveyors are perforated or foraminous, and gases flowing with the veil of fibers are exhausted through the intercepting conveyors to separate the gases from the fibers. These gases contain considerable heat, and preferably a substantial portion of the exhausted gases is channeled from the intercepting conveyors via conduits 49 to the upper edge of the intercepting conveyors to conserve the heat. Ideally, this recirculation of exhausted gases would maintain the glass fibers exiting the intercepting conveyor at a temperature within the range of from about 204°C to about 482°C (400 to 900°F). Waste hot gases from the oven could also be channeled to the upper edge of the intercepting conveyors.

From the formation and heat setting zones of the heat setting conveyors, the insulation product is passed to encapsulation module 50 where the insulation product can be encapsulated with any suitable type of film, such as film 52. Further, the moving product can be cut into individual units, such as insulation batts, prior to packaging. The product can be packaged by any suitable means, such as roll up apparatus 54.

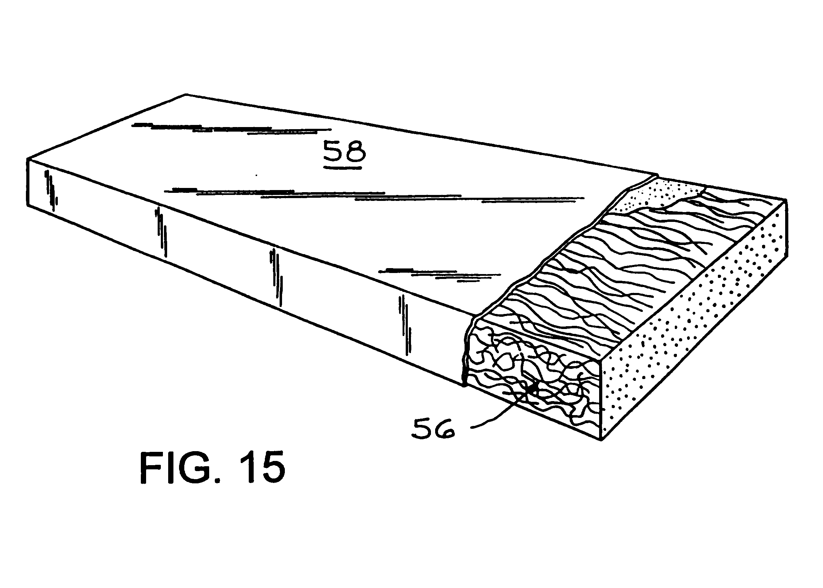

Referring to Figure 15, the insulation product of the present invention can be in the form of wool batt 56 consisting of irregularly shaped glass fibers. The batt can be covered by an exterior facing 58, many types of which are known in the prior art.

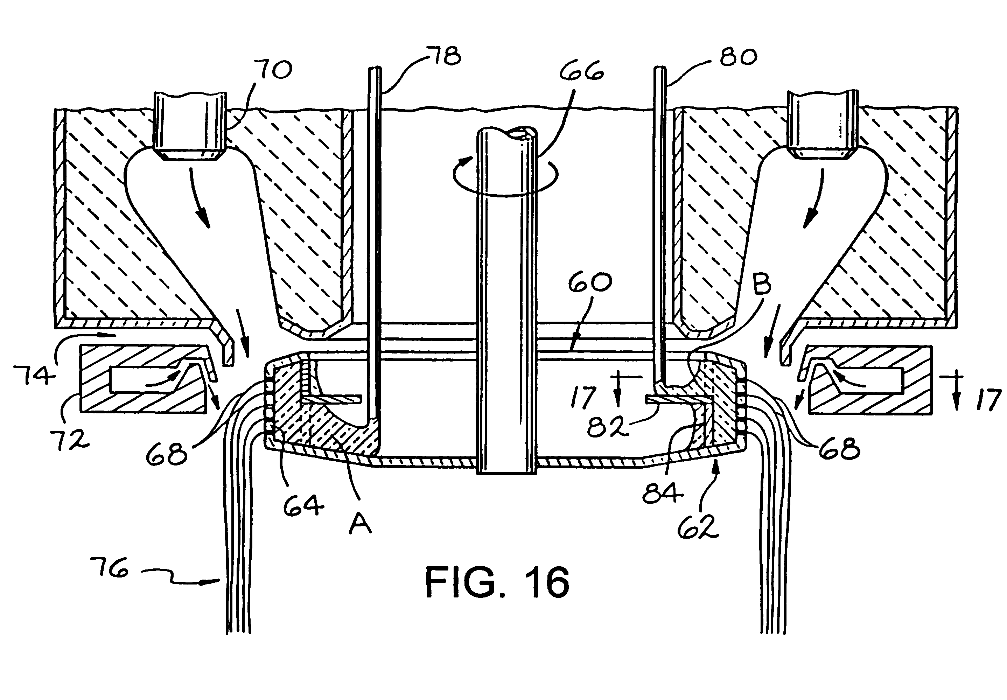

As shown in Figure 16, spinner 60 is comprised of spinner bottom wall 62 and spinner peripheral wall 64. The spinner is rotated on spindle 66, as is known in the prior art. The rotation of the spinner centrifuges molten glass through the spinner peripheral wall into primary fibers 68. The primary fibers are maintained in a soft, attenuable condition by the heat of annular burner 70. In one embodiment of the invention, an internal burner, not shown, provides heat to the interior of the spinner. Annular blower 72, using induced air 74, is positioned to pull the primary fibers and further attenuate them into secondary fibers 76, suitable for use in wool insulating materials. The secondary fibers, or dual-glass irregularly shaped glass fibers, are then collected for formation into a wool pack.

The interior of the spinner is supplied with two separate streams of molten glass, first stream 78 containing glass A and second stream 80 containing glass B. The glass in stream 78 drops directly onto the spinner bottom wall and flows outwardly with centrifugal force toward the spinner peripheral wall to form a head of glass A. Glass B in molten glass stream 80 is positioned closer to the spinner peripheral wall than stream 78, and the glass in stream 80 is intercepted by horizontal flange 82 before it can reach the spinner bottom wall. Thus, a build-up or head of glass B is formed above the horizontal flange.

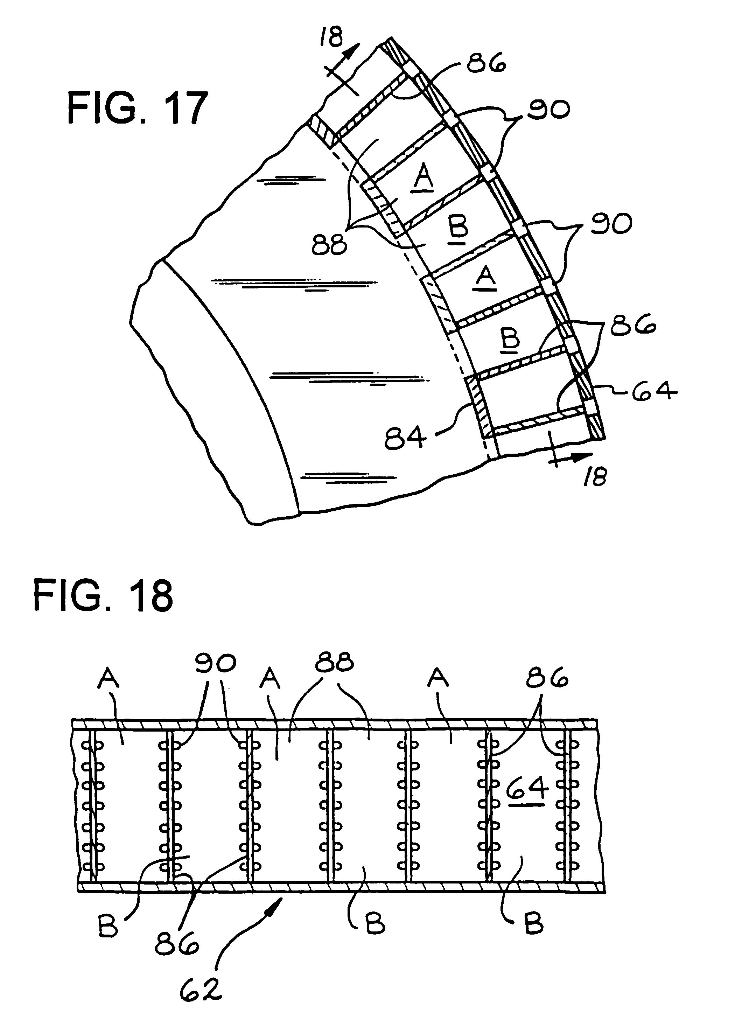

As shown in Figure 17, the spinner is adapted with vertical interior wall 84 which is generally circumferential and positioned radially inwardly from the spinner peripheral wall. A series of vertical baffles 86, positioned between the spinner peripheral wall and the vertical interior wall, divide that space into a series of compartments 88. Alternate compartments contain either glass A or glass B.

The spinner peripheral wall is adapted with orifices 90 which are positioned adjacent the radial outward end of the vertical baffle. The orifices have a width greater than the width of the vertical baffle, thereby enabling a flow of both glass A and glass B to emerge from the orifice as a single dual-glass primary fiber. As can be seen in Figure 18, each compartment 88 runs the entire height of spinner peripheral wall 64 with orifices along the entire vertical baffle separating the compartments. Other spinner configurations can be used to supply dual streams of glass to the spinner orifices.

The irregularly shaped fibers used in the present invention are dual-glass fibers, i.e. each fiber is composed of two different glass compositions, glass A and glass B. If one were to make a cross-section of an ideal irregularly shaped glass fiber of the present invention, one half of the fiber would be glass A, with the other half glass B. In reality, a wide range of proportions of the amounts of glass A and glass B may exist in the various irregularly shaped glass fibers in the wool insulating material (or perhaps even over the length of an individual fiber). The percentage of glass A may vary within the range of from about 15 to about 85% of the total glass in each of the irregularly shaped glass fibers with the balance of total glass being glass B. In general, insulation products of the irregularly shaped fibers will consist of fibers of all different combinations of the percentages of glass A and glass B, including a small fraction of fibers that are single component.

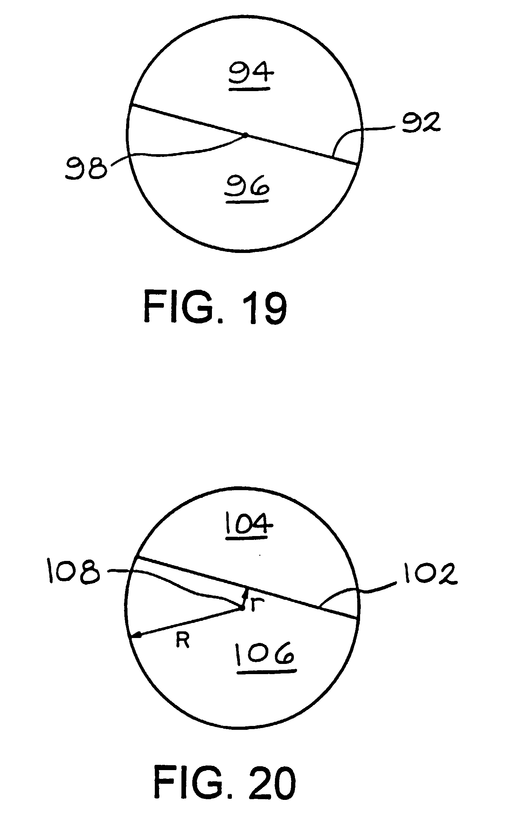

A method for measuring the proportion of glass A to glass B involves examining the cross-section of a multiplicity of fibers. If the A/B ratio is 50:50, the interface 92 between the two glasses, glass A 94 and glass B 96, will pass through the center 98 of the fiber cross-section, as shown in Figure 19. Usually the interface between the two glasses is a line which does not pass through the center of the fiber cross-section. As shown in Figure 20, interface 102 between glass A 104 and glass B 106 does not pass through center 108 of the fiber.

The "deviation ratio" is the ratio (expressed in percent) of r to R, where R is the radius of a fiber cross-section and r is the closest distance from the fiber center to the interface of the two glasses. Where the fiber cross-section is not round, the radii are measured perpendicular to the interface. Where the interface is curved, a straight line interface is approximated.

The deviation ratio is a measure of how far the A/B glass ratio is away from 50:50. The larger the deviation from 50:50, the larger r will be as a percent of R. It has been found that the average deviation ratio of the irregularly shaped glass fibers of the invention is typically greater than about 5%, generally greater than about 15%, and in many cases greater than about 30%.

An irregularly shaped fiber used in the invention differs from a helical fiber in that the rotation of the fiber is not constant, but rather varies irregularly both in direction (clockwise and counter-clockwise) and in magnitude. The magnitude of rotation of a fiber is how fast the fiber rotates per unit length of the fiber. The curvature is generally constant as dictated by the difference in thermal expansion coefficients and the A/B proportion.

Due to a continuously changing attenuation environment, each irregularly shaped fiber is twisted in a unique way. No two fibers are exactly alike. The fiber's final shape is one with a baseline curvature due to the dual-glass nature, which is modified by the twisting, irregular rotation of the plane of curvature caused by the continuously changing or stochastic attenuation environment. The fiber has a baseline curvature that is twisted through three dimensions. It is generally not helical. The fiber's irregular nature allows the irregularly shaped glass fibers to stand apart from one another and achieve a uniform volume-filling nature. Additionally, wool insulation material made of irregularly shaped glass fibers is less irritating (not as itchy) to the skin as wool insulating materials made with primarily straight fibers, and may not be as dusty.

The irregular shape of the fibers gives the wool insulating material a more uniform volume-filling nature. The primarily straight fibers of the prior art are arranged haphazardly in the wool pack. They are not uniform in volume filling. By uniform volume-filling it is meant the fibers have a desire to spread out and fill the entire volume available to them in a uniform manner. A more uniform volume-filling nature allows a more efficient use of glass fibers to resist the flow of heat.

Light density wool materials of the present invention produce dramatically improved recovery properties. This increase in recovery ability is due to the unique shape and properties of the irregularly shaped fibers. Due to the binderless nature of the irregularly shaped glass fibers of the present invention, one would expect them to slide upon compression as do the binderless straight fibers of the prior art. However, the irregularly shaped fibers cannot slide very far because the irregular shape catches on neighboring fibers, thereby preventing significant movement. Further, there is no binder placing stress on the fibers near the intersections. Rather, the irregularly shaped fibers of the present invention twist and bend in order to relieve stress. Thus, the fibers' positions are maintained and any available energy for recovery is stored in the fiber. This stored energy is released when the compression is removed and the fibers return to their recovered position.

To achieve the unique irregularly shaped glass fibers specific compositions satisfying a number of restraints are required. The first constraint involves the coefficient of thermal expansion. There is no direct constraint on the values for the coefficient of thermal expansion of either glass A or glass B. Preferably, however, the coefficients of thermal expansion of glass A and glass B, as measured on the individual glasses by standard rod techniques, differ by at least 2.0 ppm/°C.

Another constraint for satisfactory commercial production of irregularly shaped glass fibers is viscosity temperature, which is the temperature at which the glass viscosity is 100 Pa.s (1000 poise) as measured by a standard rotating cylinder technique. It is commonly referred to as the log3 viscosity temperature. The log3 viscosity temperature is preferably within the range of from about 1010°C (1850°F) to about 1121°C (2050°F), more preferably within the range of from about 1037°C (1900°F) to about 1093°C 2000°F, and most preferably about 1065°C (1950°F).

An additional constraint of the glass is that of liquidus temperature. The liquidus of a glass is the highest temperature at which crystals are stable in the molten glass. With sufficient time, a glass at a temperature below its liquidus will crystallize. Crystallization in the furnace can lead to the formation of solid particles which, once passed to the fiberizer, become lodged in the orifices of the spinner, plugging them. The difference between the log3 viscosity temperature and the liquidus for each of glass A and glass B of the dual-glass composition in the present invention is preferably at least 28°C 50°F, and more preferably more than about 111°C (200°F) lower than the log3 viscosity temperature. If this constraint is not met, crystallization may occur in the lower (i.e. colder) part of the spinner blocking the spinner's orifices.

A further constraint on the glass composition of the present invention is glass durability. Durability relates to two glass wool pack properties. The first is the ability of the glass wool pack to recover when it is opened for installation. The second is the long-term physical integrity of the glass wool pack. If the glass chemical durability is too low, upon installation the glass wool pack could fail to recover to its design thickness. Whether the wool pack fails to fully recover or disintegrates too quickly, the result is a failure of the wool pack to adequately insulate.

A useful measure of the chemical durability of a glass fiber for an insulation application is obtained by measuring the percent weight loss of 1 gram of 10 micrometer diameter fibers after 2 hours in 0.1 liters of distilled water at 96°C (205°F). The durability so measured depends strongly on the composition of the glass fibers and, to a lesser, extent, on the thermal history of the fiber. To assure adequate performance of the wool pack, fibers of each of the dual glass compositions should exhibit a weight loss in this test of less than about 4% and preferably less than about 2.5%. In addition to its strong dependence on glass composition, the chemical durability of a glass fiber depends to a lesser extent on its thermal history. Thus, for example, heating a glass fiber for several minutes at 538°C (1000°F), will improve its chemical durability somewhat. It is understood that the limits on chemical durability disclosed here refer to measurements on glass fibers with no heat treatment other than that employed in their original attenuation.

Since glass wool insulation typically contains some fibers that are thin enough to be respirable if they break into short lengths, it is possible that some fibers may become airborne and be inhaled. In the body, they will be exposed to physiological fluids. To the extent that the dissolution rate of the fibers in the body plays a role in the biological activity of inhaled fibers, it may be preferable to produce glass fibers with a relatively high dissolution rate in such fluids. The dissolution rate of glass fibers is expressed as the dissolution rate constant measured for fibers in simulated lung fluid at 37°C (98°F). It depends strongly on the glass fiber composition and, to a lesser extent, on its thermal history. It is preferable to use glass compositions having a dissolution rate constant of at least 100 ng/cm²hr for all insulation fibers. Therefore the dissolution rate constant for fibers of each of the dual glass compositions is preferably at least 100 ng/cm²hr. As with the chemical durability, subsequent heat treatment of the fiber will reduce its dissolution rate. It is understood that the 100 ng/cm²hr limit refers to fibers formed into a wool insulation pack in the final product form.

The dual-glass compositions used in the present invention comprising one high-borate, low-soda lime-aluminosilicate composition as glass A and one high-soda, low-borate lime-aluminosilicate composition as glass B satisfy all constraints necessary for a successful irregularly shaped fiber. By high-borate, low-soda lime-aluminosilicate composition, it is intended that the glass composition have a borate content of within the range of about 14% to about 24% by weight of the total components. By a high-soda, low-borate lime-aluminosilicate composition, it is intended that the glass composition have a soda content within the range of from about 14% to about 25% by weight of the total components.

Preferably, the first glass composition comprises by weight percent from about 50 to about 61% silica or SiO₂, from about 0 to about 7% alumina or Al₂O₃, from about 9 to about 13% lime or CaO, from about 0 to about 5% magnesia or MgO, from about 14-24% borate or B₂O₃, from about 0 to about 10% soda or Na₂O, and from about 0 to about 2% potassium oxide or K₂O.

The second glass composition is preferably one which comprises by weight percent from about 52 to about 60% silica or SiO₂, from about 0 to about 8% alumina or Al₂O₃, from about 6 to about 10% lime or CaO, from about 0 to about 7% magnesia or MgO, from about 0 to about 6% borate or B₂O₃, from about 14 to about 25% soda or Na₂O, and from about 0 to about 2% potassium oxide or K₂O. It is understood that in each composition there will typically be less than about 1% total of various other constituents such as, for example Fe₂O₃, TiO₂ and SrO, not intentionally added to the glass, but resulting from the raw materials used in the batch formulation.

More preferably, the dual-glass composition used in the present invention comprises a first glass composition containing approximately 52-57% silica, 4-6% alumina, 10-11% lime, 1-3% magnesia, 19-22% borate, 4-6% soda, 0-2% potassium oxide, and a second glass composition containing approximately 57-65% silica, 2-6% alumina, 8-9% lime, 4-6% magnesia, 0-6% borate, 15-21% soda, and 0-2% potassium oxide.

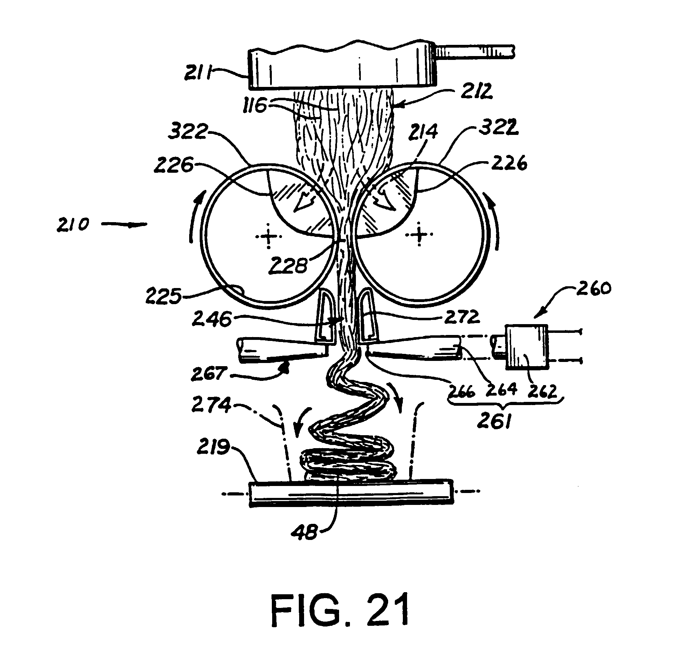

Yet another method and apparatus 210 may be used to produce wool packs 48 of long glass fibers 116 as representatively shown in Figure 21.

Referring to Figure 21, the present invention provides an apparatus 210 for forming a wool pack 48 from fibers 116 produced from a fiberizing apparatus 211. The apparatus 210 may be provided in several configurations. Regardless, however, the apparatus 210 includes at least two high-speed foraminous conveyor surfaces 322 in spaced relationship, defining a gap 228 therebetween to receive a veil 212 from a fiberizing apparatus. A suction apparatus 226 is positioned to exhaust gases 214 from the veil 212 through at least one of the foraminous conveyor surfaces 322, and the veil 212 received on the surfaces 322 is conveyed through the gap 228 to form a web 246 of loosely related glass fibers 116 traveling in a generally downward direction defining an initial path of travel. The suction apparatus 226 is constructed in a conventional manner with a suction plenum distributing suction to approximately a quarter of the conveyor surface 322, from approximately the 12 to 3 o'clock position for the left conveyor surface 322 (or 9 o'clock to 12 o'clock position for the right conveyor surface 322), as shown in Figure 21. The suction plenum is connected to a source of vacuum (not shown).

The apparatus 210 just described includes foraminous conveyor surfaces 322 which are high-speed surfaces 322 moving in generally downward directions, positioned to receive a veil 212. This configuration is particularly useful in collecting long fibers 116 produced by a rotary fiberizing apparatus 211. This embodiment of the apparatus 210 preferably further includes a lapping device for lateral movement of a web 246, and may include the lapping device 260 of the present invention described below, or alternately, other conventional lapping devices and techniques, downstream from the high-speed conveyor surfaces 322. The apparatus may further include a collection surface 219 for collecting the web 246 as portions thereof deviate in their travel.

The high-speed conveyor surfaces 322 of the apparatus 210 are preferably operable at speeds approximately equal to the rate at which the veil 212 received thereon travels in a generally downward direction as measured at the conveyor surfaces. However, the high-speed conveyor surfaces 322 may be operated at approximately 25% to approximately 200%, or more narrowly, 50% to 175% of the veil rate. The high-speed conveyor surfaces 322 are preferably positioned approximately 20 centimeters to approximately 1.5 meters from the spinner of a rotary fiberizing apparatus.

It has been found that conveyor surfaces 322 operated at high speeds and configured as taught in accordance with the present invention make possible the collection of long fibers 116 which has not been previously attained in the prior art. While there is significant entanglement with long fibers, the fibers in the web 246 are generally randomly oriented and loosely related. Where short fibers are used, the entanglement is much reduced and the relation between fibers is even more tenuous.

As shown in Figure 21, it is further preferred to include shields 272 in the apparatus of the present invention which define a passage through which the web 246 freely passes, i.e. passes without significant surface contact. The shields 272 are preferably positioned in spaced opposing relationship so that their surfaces define the passage. They may be mounted on the ends of the resonator tubes 264 as shown in Figure 21, or in any other suitable manner. The shields 272 serve to stabilize the travel of the web 246 by shielding it from air currents established by conveyor surfaces 322, such as high-speed rotating drums 225, and from ambient air turbulence. Stability in the downward web travel is improved, and web wander substantially eliminated.

Optionally, the present invention may further include a binder spraying device downstream from the high-speed conveyor surfaces 322, positioned either between the shields 272 and the resonator tubes 264, with the resonator tubes 264 spaced downward from the shields (not shown), or below the resonator tubes 264. The high-speed conveyor surfaces 322 advantageously produce a web of loosely related fibers having an open structure. The open structure allows penetration of binder applied to at least one face of the web 246, particularly a web of short fibers, after it exits from the surfaces 322. Application of binder to a web reduces some of the environment drawbacks associated with the use of binder in wool production. The lower temperature of the web reduces the volatile organics which are otherwise formed by spraying binder on hot veils 212. As well, the overall air volume including binder compounds arising from collection conveyors is smaller than the volume of air generated by conventional techniques which apply binder to short fibers in veils.

The apparatus 210 may further include a lapping device 260 to provide distribution of the web 246 over a collection surface 219. Conventional mechanical devices or air knives may be used with the apparatus 210. However, due to the speed of downward travel of the web 246, the high-speed conveyor surfaces 322 are preferably coupled with the lapping device 260 which causes portions of the web 246 to deviate laterally by applying low-frequency sound intermittently thereto, as more fully described below. The lapping device 260 is preferred because it is capable of higher frequency lapping than conventional devices. Thus, combination of the high-speed conveyor surfaces 322 and the lapping device 260 of the present invention are preferred for distributing a web 246 of loosely related fibers, particularly long fibers 116, on a collection surface 219, thereby producing a wool pack 48 of long fibers 116 suitable for commercial products.

Collection surface 219 can be a box, conveyor (see 242 in Figure 1), chute, or other device. Regardless, as shown in Figure 21, collection guides 274 may be further provided to assist in producing a wool pack 48 from the web 246.

Low-frequency sound may be applied to any web 246 as disclosed herein, whether the web 246 is comprised substantially of long or short fibers. Accordingly, the present invention further encompasses a lapping device 260 which causes lateral movement or a lapping motion in a generally continuous web 246. Still referring to Figure 21, in its simplest embodiment, the lapping device 260 of the present invention includes one low-frequency sound generator 261 having one resonator tube 264 with an open end 266 from which sound may be emitted, and a feeder 262. The tube 264 has a length of λ/4, where λ is the wavelength of the low-frequency sound. The λ/4 length produces a standing wave in the tube 264, which results in a high-pressure, low air velocity node at the feeder end of the tube 264, and a low-pressure, high air velocity node at the open end 266. The resonator tube 264 is also shaped for emission of low-frequency sound to a portion of a web 246 where the tubular shape gradually and smoothly transitions to a rectangular shape at the open end 266 which provides for more desirable sound distribution.

The feeder 262 establishes the frequency of the sound produced. Feeders 262 typically use pressurized air and/or mechanical components to produce low-frequency sound, as shown in U.S. Patent Nos. 4,517,915, issued May 21, 1985 to Olsson et al., 5,005,511, issued April 9, 1991 to Olsson et al., and 5,109,948, issued May 5, 1992 to Sandstrom. Low-frequency sound generators are commercially available from Infrasonik AB, Stockholm, Sweden, the assignee of the patents noted, and may be used to produce low-frequency sound in one or two resonator tubes 264. Connection to power and pressurized air lines is also provided where needed, as shown in Figure 21.

In a still further apparatus and method for manufacturing wool packs 48, a device 360 may be used to move a veil 212 and thereby produce a more uniform distribution thereof on a collection surface 219.

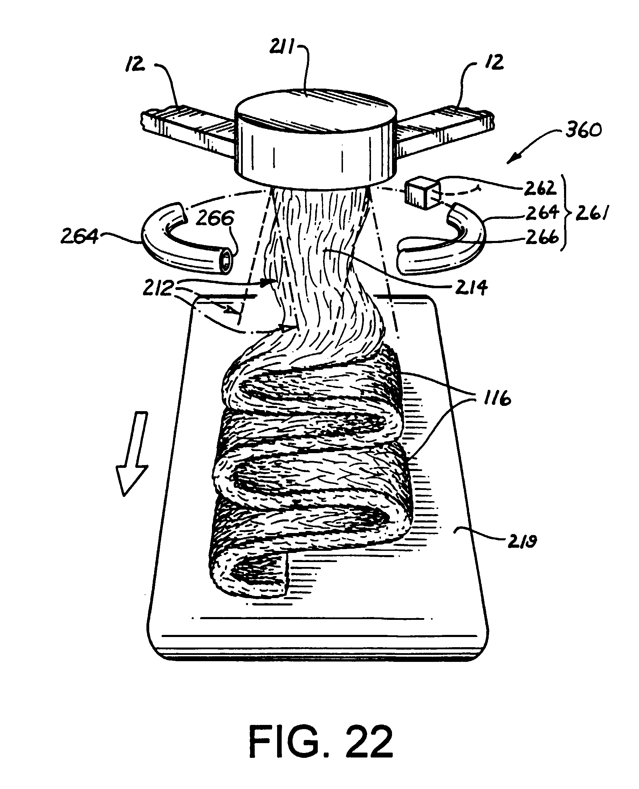

Figures 21 and 22 show various alternative embodiments. As may be seen in Figure 22, a veil 212 including gases 214 and glass fibers 116 produced by a rotary fiberizing apparatus 211 is distributed by applying low-frequency sound to at least one portion of the veil 212, and causing said veil 212 to deviate in its generally downward direction of travel. The useful ranges of low-frequency sound (assumed to be produced at the resonant frequency of a device 360) may differ somewhat depending on the characteristics of the veil 212 being produced, so that some frequencies will produce motion of the veil 212, while others will produce somewhat less movement. Nonetheless, useful frequencies are generally in the range of 30 cycles per second or less. The preferred frequency for lapping a veil of glass fibers is about 15 cycles per second.

As well, the amount of force applied to the veil 212 may be varied by changing the amplitude of the feeder 262 to vary the energy in the low-frequency sound. In practice, the air velocity field produced by the low-frequency sound across the veil 212 is nonuniform due to the momentum and general downward motion of the veil, and the fact that the sound is not in a contained space where coupling between opposed tubes 264 is possible. Movement of the veil 212 deviates from the ideal uniform air velocity field between the tubes. Thus, in practice, some compressive force is applied to the veil 212 by the low-frequency sound. However, the force may be reduced to essentially a noncompressive level, or may be increased to cause a partial collapse in the veil 212.

In the simplest embodiment, the lapping device 360 includes one low-frequency sound generator 261 having one resonator tube 264 having an open end 266 from which sound may be emitted. The tube 264 has a length of λ/4, where λ is the wavelength of the low-frequency sound. The λ/4 length produces a standing wave in the tube 264, which results in a high-pressure, low air velocity node at the feeder end of the tube 264, and a low-pressure, high air velocity node at the open end 266. The resonator tube 264 is also shaped for emission of low-frequency sound to a portion of a veil 212, and may include a further sound distribution device such as generally rectangular transition piece 267 (shown in Figure 21).

As understood in the field of infrasonics, the resonator tube 264 is substantially uniform in diameter, has a smooth surface, and bends are carefully made to convey the sound with minimal disturbance. The low-frequency sound generator 261 also includes a feeder 262 which establishes the frequency of the sound produced.

Referring to Figure 22, the lapping device 360 has two resonator tubes 264 with the open ends 266 thereof in spaced, opposing relationship. Thus, in the preferred method, low-frequency sound is alternately applied at generally opposing locations near the veil 212, causing portions of the veil 212 to deviate in generally alternate directions in its direction of travel. Although not preferred, the opposing resonator tubes 264 may be offset vertically, and the emission of low-frequency sound electronically or mechanically synchronized to produce the desired effect. In this regard, some trial and error may be required for a particular vertical offset with dependency upon the characteristics of the veil 212. Although not preferred, two feeders 262 may be provided, one for each resonator tube 264 in any offset or other relationship, electronically synchronized and timed to provide the desired emission of low-frequency sound.

Still further, in an alternative embodiment, at least one low-frequency sound generator 261 may be used with more than two resonator tubes 264 having open ends 266 from which low-frequency sound may be emitted. The open ends are preferably spaced generally equally around a veil 212. The plurality of resonator tubes 264 in one such embodiment may define a generally circular space between the open ends thereof through which a veil 212 may pass. However, other patterns surrounding the path of the veil 212 are possible.

Such an arrangement may be provided to vary the veil 212 motion in alternate directions as described, or in more than just alternating directions, for example, to create a circular motion, or to vary the motion depending on the nature of the collection surface 219 desired for a production run. Collection surfaces 219 may include generally horizontal, vertical, or angled conveyors, alone or in pairs, or containers or sheets positioned to receive the veil 212. The collection surfaces 219 are preferably foraminous, and vacuum suction apparatus provided to remove gases from the veil 212.

Although the distance from the fiberizer may vary, the centerlines of the resonator tubes 264 at their open ends 266 may be as close as approximately 0.3 meters (12 inches) from the spinner of a rotary fiberizing apparatus 211, or even closer if the desired effect is achieved. Typically, the resonator tubes would vary in position from approximately 0.3 meters (12 inches) to approximately 1.22 meters (4 feet), but could be spaced farther from the spinner if the desired effect is achieved.

Still referring to Figure 22, the apparatus preferably includes transition piece 267 (shown in Figure 21) for distribution of low-frequency sound emitted from at least one open end of a resonator tube 264. This piece serves to distribute the sound over a wider portion of the veil 212, rather than a circular portion, as would be the case where applied directly from the resonator tube 264. The transition piece allows the low-frequency sound to produce a more even motion in the veil 212. By way of example, not limitation, given a resonator tube 264 approximately 0.15 meters (6 inches) in diameter, a transition piece could extend from the circular cross section a distance of approximately 0.33 meters (13 inches), gradually and smoothly, to the open end 266 which is rectangular in shape, approximately 0.28 meters (11 inches) wide by 0.07 meters (2.75 inches) high.

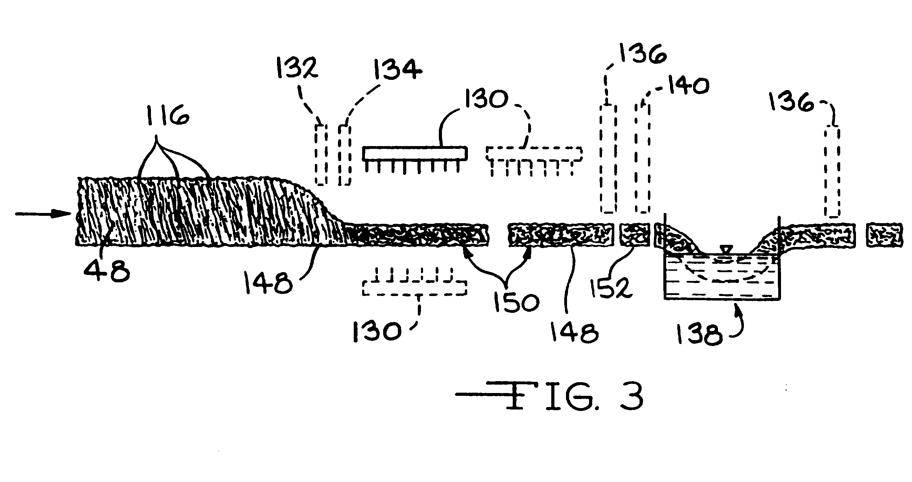

Referring now to Figure 3, the wool portions 148 including irregularly shaped glass fibers 116 may be processed directly without intervening steps which accompany conventional glass fiber processing operations. That is, a wool portion 148 of the irregularly shaped glass fibers 116 is needled, as generally indicated at 130, without the precursor steps of carding, blending with other fibers, or lubricating, otherwise required with conventional straight glass wools. The openness and resiliency of fibers 116 further allow them to resist abrasion and needling damage by deflection rather than breakage, producing less dust during processing. Nonetheless, the open structure of the irregularly shaped glass fibers 116 improves the ease with which carding and/or blending operations, generally indicated at 132 and 134 respectively, are performed, when such are desired. Such processes are preferably performed before needling, but could also follow needling 130.

Further, irregularly shaped glass fibers 116 produced in accordance with the present invention have a more uniform weight distribution, so that nonwoven materials produced by needling exhibit more uniform properties. As a result, a series of articles including irregularly shaped glass fibers 116 are illustratively disclosed herein in Figures 3 through 12 which may be produced at lower cost, or processed with less effort, with varied and improved product performance characteristics.

Accordingly, the present invention provides a method for producing nonwoven material 150 from irregularly shaped glass fibers 116 including the steps of providing a portion 148 of irregularly shaped glass fiber wool, needling the irregularly shaped glass fiber wool, thereby producing a nonwoven material 150 substantially comprised of irregularly shaped glass fibers 116. Preferably, the method is performed with irregularly shaped, bicomponent glass fibers produced by rotary fiberization, and requires no precursor processing such as carding or blending.

The present invention, thus, provides for a nonwoven material 150 comprised of a preferably uncarded, needled glass fiber wool including irregularly shaped glass fibers 116, preferably bicomponent glass fibers unblended with other fibers. Nonwoven materials 150 including needled, irregularly shaped glass fibers in accordance with the present invention demonstrate not only the high temperature and chemical resistance of glass, but resiliency, high loft, resistance to tear, and a soft felt-like feel (i.e., soft "hand"). The choice of needles, penetrations per square millimeter of material, line speed, vertical displacement of the needles, repetitive needling, and needling from one or both sides, as representatively indicated in phantom at 130, can vary these characteristics, making numerous product applications possible.

As may be understood, elimination of carding 132 and/or blending steps 134 makes possible lower cost production of nonwoven material which, further, exhibits beneficial characteristics of the irregular glass fibers 116 of the present invention in a resilient felt-like material. Due to the nature of the fiberizing and collection techniques mentioned above, the needling 130 can proceed directly upon the wool pack 48 after production. Simply stated, a nonwoven fabric material 150 may be produced in sheets 152 by a cutting or stamping process, indicated representatively at 136, as shown in Figure 3.

Further processing in the way of applying a coating, saturant, or filler is representatively indicated at 138, and may include, as necessary for a particular coating, saturant, or filler, or other surface treatment to include multiple steps such as heating, drying, or rinsing.

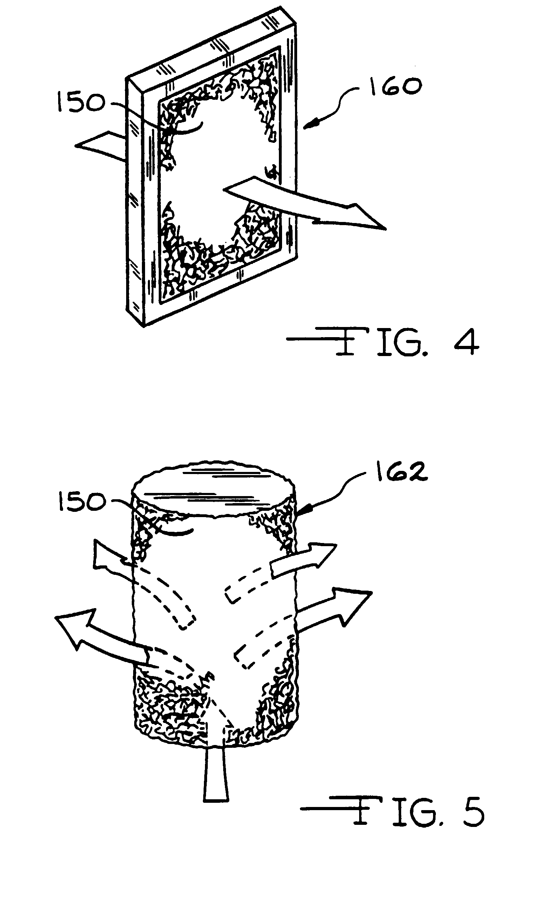

Referring to Figures 4 through 7, illustrative product applications are shown. Figures 4 and 5 illustrate alternative filtration elements 160, 162 using the nonwoven, felt-like material 150 of needled irregularly shaped glass fibers 116. The filtration element is illustratively configured as a panel 160 or a bag 162. Due to the fiber characteristics, filtration elements 160, 162 will exhibit generally uniform filtration characteristics throughout, and are capable of application in high temperature environments. In addition, surface treatments may be added (e.g., at 138) to provide increased surface area, or reaction sites for application-specific chemical species. In addition, sheets 152 of the nonwoven material 150 may also serve as a sorbant material without further processing, or include a surface treatment to enhance sorbant properties of the wool portion, or form part of a composite sorbant material. One particular application of interest in this regard is its use as a sorbant for water-borne oil spills.

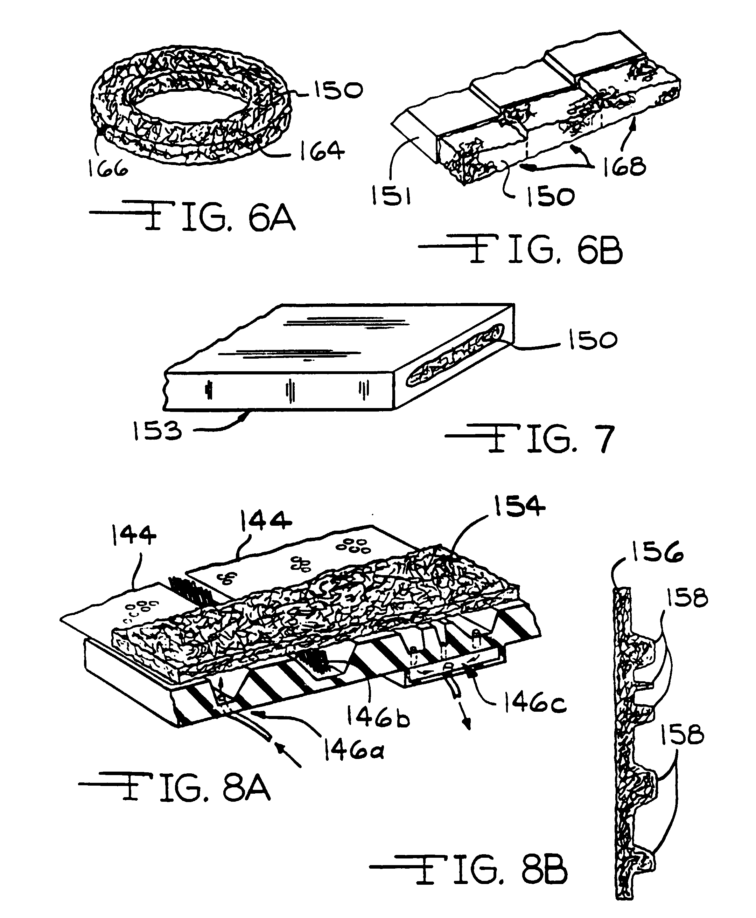

The irregularly shaped glass fibers 116 in accordance with the present invention may be treated (as indicated generally at 138) with a sorbant or combined with a filler which penetrates into the fiber matrix to produce additional composite products. Referring now to Figure 6a, a representative gasket 166 is made of a needled unwoven material 150 (as shown) or alternatively of an unneedled wool portion 148 in combination with a saturant 164 such as a closed cell foam. In accordance with the present invention, the resiliency and openness of the irregularly shaped fibers 116 in the needled wool material 150 provides to the combination needed recovery not present in the foam saturant, while the foam saturant 164 provides a sealing capability lacking in the more open fiber structure of the needled material 150. Similarly, in a reinforcements application, needled felts or unneedled wool portions may be used to reinforce a filler material. Needled, unwoven wool material 150 including the irregularly shaped fibers 116 of the present invention may be used, for example, with an asphalt filler 151 for a high loft roofing product. In this regard, needling may be varied across the width of the material so that when cut to form separate shingles 168, areas have different thicknesses, as shown in Figure 6b. Alternatively, needled or unneedled wool portions 148 may be used, for example, with a polyester or other polymer fillers to provide reinforcement for a substantially rigid composite structural element. As representatively shown in Figure 7, needled wool materials 150 including the irregularly shaped fibers 116 may form the core of an extruded or pultruded structural element 153.

In addition to needling, carding, and blending processes 130, 132, 134, the irregularly shaped fiber 116 of the present invention may be processed by chopping into fiber segments for use, as indicated at 140 in Figure 3. Such chopping follows rotary fiberization or even may follow needling, to prepare the irregularly shaped fibers 116 for use as a reinforcement. In some applications, the fibers 116 may alternatively be carded or combed to break down the pack structure. Regardless, as in wet lay techniques known for straight fibers, the irregularly shaped fibers 116 may then be wetted, deposited, and dried to form a mat 154 of irregularly shaped fibers 116, as representatively shown in Figure 8a. Such a mat 154 could be used as a precursor for shingles 168, as well as an underlying matrix for furnishings such as wall coverings, floorings, and ceiling tiles which are fire-, smoke-, or chemical-resistant. As shown in Figures 8a and 8b, the resiliency and openness of the irregularly shaped glass fiber 116 makes possible texturing the mat structure to provide a variety of looks previously unavailable with conventional fiber substrates.

As shown in Figure 8a, a conveyor 144, such as a foramenous or split conveyor, may be used to carry the mat over a texturizing station where air jets 146a, brushes 146b, vacuum 146c, or other texturizing means causes irregular fibers 116 in the mat surface to release and create a textured line 158. Subsequent application of a coating, saturant, or filler (representatively shown in Figure 3) such as used for ceiling tiles, wall coverings, floorings, shingles, or gaskets, will produce a textured product. A representative cross section of the texturized mat 156 is shown in Figure 8b.

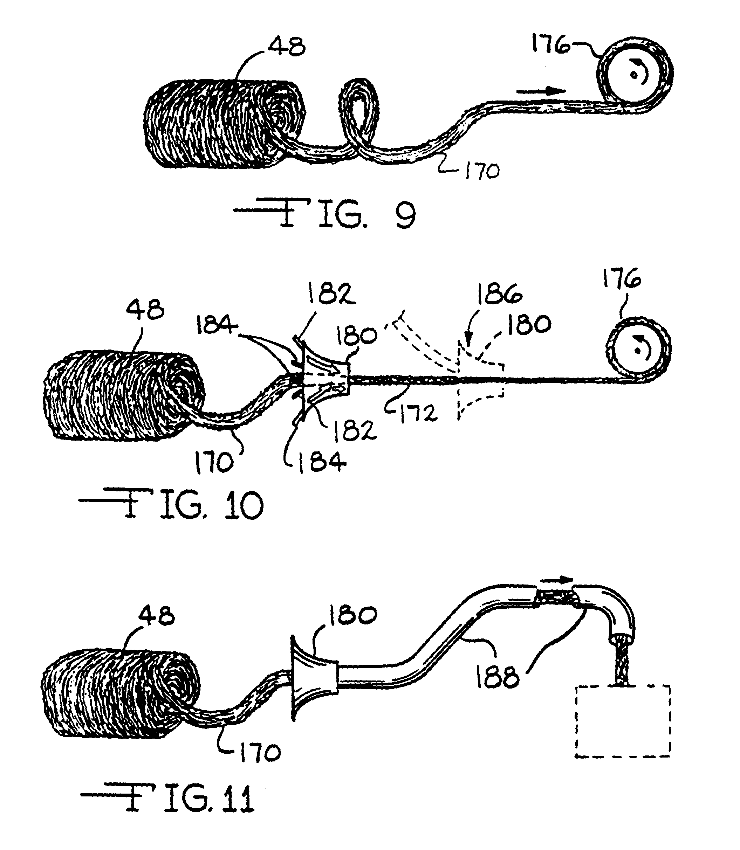

Finally, in a further aspect of the present invention, a nonwoven material 150 including irregularly shaped fibers 116 is provided in a generally continuous wool tow 170, shown in Figure 9. The generally continuous tow 170 is produced by "unwinding" a fiberglass wool pack 48 collected by a direct forming method, such as that described as preferred herein. In the direct forming method, irregularly shaped glass fibers 116 are collected such that a generally spiral fiber relationship in the veil of fibers is captured and their spiral orientation is generally maintained in the wool pack 48. As the direct forming method may also be used to collect long straight fibers from a rotary fiberizer, the "unwinding" discussed herein is understood to be capable of performance on batts of such material, albeit with added difficulty in maintaining the continuous tow due to the reduced fiber entanglement. Nonetheless, the generally continuous wool tow 170 may be further processed in numerous ways, and rolled onto a core 176.

The tow 170 may be needled without further processing to create a nonwoven fabric strip, or further processed by carding or blending; by cutting, chopping, or stamping; or by addition of a coating, saturant, or filler in like fashion as set forth in Figure 3 and discussed above.

Moreover, the generally continuous wool tow 170 of irregularly shaped fibers 116 may be fed one or more times through an air driven venturi tube 180, shown in Figure 10. Such a venturi tube 180 has air jets 182 providing an axially aligned air flow, and acts as an air amplifier. Venturi tubes 180 are commercially available, such as Model No. 218 Vortex tube from ITW Vortec Corp., Cincinnati, Ohio. The venturi tube 180 may be used to simply assist in unwinding the tow from a wool pack 48. However, when modified in accordance with the present invention, the venturi tube further includes a plurality of tangentially targeted air jets 184 inducing a spiraling vortex of air. Given the axial air flow component and the spiraling vortex, the venturi tube 180 induces a longitudinal twist in the tow 170 driven therethrough, resulting in a yarn 172. Yarns of varying openness can be made from wool fibers, straight or preferably irregularly shaped, depending on the degree of twist imparted to the tow 170. Alternately, the yarn 172 may be formed by mechanical means; however, air means are preferred for reduced impact on the entanglement of irregularly shaped fibers and the integrity of the tow 170.

In addition, with continued reference to Figure 10, the yarn 172 thus formed may be further combined (indicated generally at 186) with other yarns of like or different fibers by mechanical twisting means, or by a subsequent pass through the venturi tube 180, to yield combined yarn properties for specific applications. The yarns of irregularly shaped glass fibers, alone or in combination with other fibers, may then be used as carriers or reinforcements, or in additional textile operations including production of woven textiles.

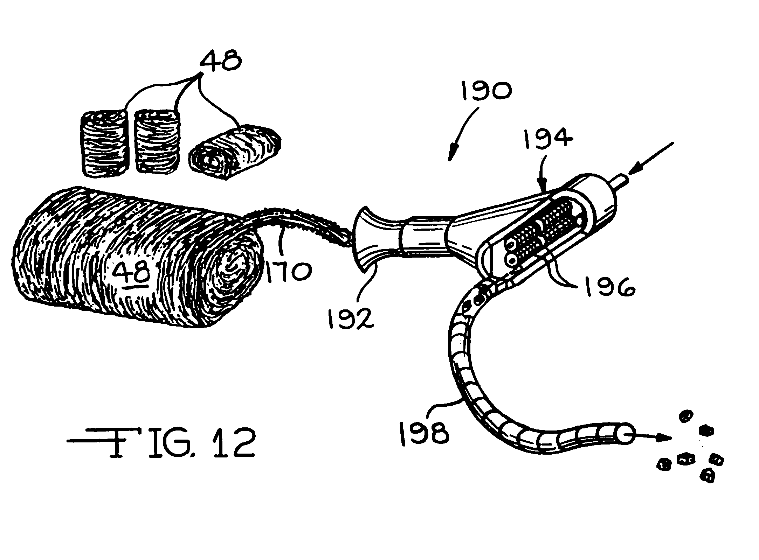

Referring now to Figure 11, in accordance with the present invention, a still further feature of the continuous tow 170 is that the generally continuous tow 170 may be transported between operating stations in a manufacturing facility through transport tubes 188. The tow may be blown or drawn by air movement induced by fans or vacuum or venturi tubes. Thus, from the fiberizing station, wool packs 48 of irregularly shaped fibers 116 collected by direct forming methods as disclosed herein may be "unwound" into a tow 170 and transported for further processing at remote stations without manual intervention, conventional conveyors, or other mechanical transport. Preferably the transport pipes 188 are built as overhead systems requiring a minimum of plant floor space.

The production of a generally continuous tow 170 by "unwinding" a fiberglass wool pack 48 collected by a direct forming method may further be applied in providing a portable blowing wool apparatus 190, shown in Figure 12, comprising a wool pack 48 of irregularly shaped glass fibers 116 collected by direct form methods. In accordance with the present invention, a highly compressed wool pack 48 is unpacked on site, and the tow 170 drawn therefrom by means of a standard venturi tube 192. The tow 170 is thereafter passed through a cubing element 194 which cuts the tow 170 into cubes or pieces, which are then preferably blown by compressed air into spaces to be insulated. The cubing element 194 preferably includes two hollow cutting cylinders 196. The cubes are preferably 12 to 25 mm in any of the width, length, or height directions. Once cut, the cubes drop into the center of the cylinders 196 from where they are blown by compressed air from an air compressor (not shown), or alternatively, by a fan or blower, through the duct 198. This portable system allows an installer to take advantage of the high compressibility of the irregularly shaped fiber 116, reduce capital costs of trucks and hoses, and perform a cleaner on-site procedure.

Having described the invention in detail and by reference to the preferred embodiments thereof, it will be apparent that modifications and variations are possible without departing from the scope of the invention which is defined in the appended claims.

## Claims

1. A method for producing nonwoven material (150) from glass fibers (116) twisted by random changes in rotation along their length, comprising the steps of:
producing a portion (148) of glass fiber wool; and
needling (130) the glass fiber wool (148).

2. A method according to claim 1, wherein the wool portion (148) is produced by rotary fiberization.

3. A method according to claim 2, wherein the portion (148) is produced by a direct forming method, in which the fibers (116) produced by rotary fiberization are captured in a generally spiral relationship and this orientation is maintained during collection of the fibers (116).

4. A method according to claim 3 wherein the wool portion (148) is produced by drawing the spirally oriented collection of fibers into a tow (170).

5. A method according to any one of claims 1 to 4, wherein the glass fibers (116) comprise at least two separate glass components.

6. A method according to claim 5, wherein the glass fibers (116) are unblended, bicomponent glass fibers.

7. A method according to any one of claims 1 to 6, in which the glass fiber wool is heated and the glass fibers (116) are then allowed to relax prior to the step of needling (130).

8. A method according to any one of claims 1 to 7, wherein needling (130) is performed upon at least the surface of the wool portion (148).

9. A method according to any one of claims 1 to 8, wherein prior to being needled (130), the wool portion is not subjected to carding, blending of other fibers or addition of lubricant.

10. A method according to any one of claims 1 to 9, further including treating the wool portion (148) with a saturant (164) after needling (130).

11. A method according to claim 10, further including bonding the needled material to a flexible backing prior to treatment with the saturant (164).

12. A method according to any of claims 1 to 9, further including the step of treating the fibers with a sorbant after the step of needling (130).

13. A method according to any of claims 1 to 9, further including the step of combining the fibers with a filler after the step of needling (130).

14. A method according to any one of claims 1 to 13, wherein the wool portion is a batt of glass fibers (116) twisted by random changes in rotation along their length.

15. A method according to any one of claims 1 to 14, further including cutting or stamping (136) of the needled material to produce sheets (152).

16. A method according to any one of claims 1 to 13, further including chopping (140) of the wool portion (148) to form separate groups of glass fibers (116).

17. A method according to claim 16, in which the groups of fibers (116) are wetted, deposited and dried to produce a mat (154) of fibers (116) twisted by random changes in rotation along their length.

18. A method according to claim 17, further including texturizing at least one surface of the mat (154).

19. A method according to claim 15 or claim 16, further including applying a surface treatment for adding surface area to fibers (116).

20. A nonwoven material (150) comprising a needled wool including glass fibers (116) twisted by random changes in rotation along their length, produced according to any one of claims 1 to 17.

## Patentansprüche

1. Verfahren zur Herstellung von Vlies (150) aus durch zufallsverteilte Rotationsänderungen entlang ihrer Länge verdrillten Glasfasern (116), wobei:
ein Teil (148) Glasfaserwolle hergestellt wird; und
die Glasfaserwolle (148) vernadelt wird (130).

2. Verfahren nach Anspruch 1, wobei der Wolleteil (148) durch Rotationsfaserbildung hergestellt wird.

3. Verfahren nach Anspruch 2, wobei der Teil (148) in einem direkten Formgebungsverfahren hergestellt wird, in dem die durch Rotationsfaserbildung hergestellten Fasern (116) in einer im allgemeinen spiralförmigen Beziehung gehalten werden und diese Orientierung während dem Sammeln der Fasern (116) aufrechterhalten wird.

4. Verfahren nach Anspruch 3, wobei der Wolleteil (148) hergestellt wird, indem die spiralförmig orientierte Ansammlung von Fasern in ein Seil (170) gezogen wird.

5. Verfahren nach einem der Ansprüche 1 bis 4, wobei die Glasfasern (116) wenigstens zwei separate Glaskomponenten aufweisen.

6. Verfahren nach Ansprüche 5, wobei die Glasfasern (116) unvermischt und zwei-komponentig sind.

7. Verfahren nach einem der Ansprüche 1 bis 5, wobei die Glasfaserwolle erhitzt, und den Glasfasern (116) dann vor der Vernadlung (130) eine Relaxation gewährt wird.

8. Verfahren nach einem der Ansprüche 1 bis 7, wobei die Vernadlung (130) wenigstens auf der Oberfläche des Wolleteils (148) ausgeführt wird.

9. Verfahren nach einem der Ansprüche 1 bis 8, wobei der Wolleteil vor der Vernadlung (130) weder kardiert, noch mit anderen Fasern vermischt, noch mit Gleitmittel versetzt wird.

10. Verfahren nach einem der Ansprüche 1 bis 9, das außerdem eine Behandlung des Wolleteils (148) mit einem Imprägniermittel (164) nach der Vernadlung (130) einschließt.

11. Verfahren nach Anspruch 10, das außerdem ein Verbinden des vernadelten Materials mit einem flexiblen Träger vor der Behandlung mit dem Imprägniermittel (164) einschließt.

12. Verfahren nach einem der Ansprüche 1 bis 9, das außerdem ein Behandeln der Fasern mit einem Sorbtionsmittel nach der Vernadlung (130) einschließt.

13. Verfahren nach einem der Ansprüche 1 bis 9, das außerdem die Kombination der Fasern mit einem Füllstoff nach der Vernadlung (130) einschließt.

14. Verfahren nach einem der Ansprüche 1 bis 13, wobei der Wolleteil in einem Klumpen von Glasfasern (116) besteht, die durch zufallsverteilte Rotationsänderungen entlang ihrer Länge verdrillt sind.

15. Verfahren nach einem der Ansprüche 1 bis 14, das außerdem das Schneiden oder Pressen (136) des vernadelten Materials zur Herstellung von Platten (152) einschließt.

16. Verfahren nach einem der Ansprüche 1 bis 13, das außerdem das Zerhacken (140) des Wolleteils (148) zur Bildung von separaten Gruppen von Glasfasern (116) einschließt.

17. Verfahren nach Anspruch 16, in dem die Fasergruppen befeuchtet, abgesetzt und getrocknet werden, um eine Matte (154) aus Fasern (116) herzustellen, die durch zufallsverteilte Rotationsänderungen entlang ihrer Länge verdrillt sind.

18. Verfahren nach Anspruch 16, das außerdem das Texturieren wenigstens einer Oberfläche der Matte (154) einschließt.

19. Verfahren nach Anspruch 15 oder 16, das außerdem eine Oberflächenbehandlung zur Oberflächenvergrößerung der Fasern (116) einschließt.

20. Vlies (150) mit vernadelter Wolle, die Glasfasern (116) enthält, die durch zufallsverteilte Rotationsänderungen entlang ihrer Länge verdrillt und nach einem der Ansprüche 1 bis 17 hergestellt sind.

## Revendications

1. Procédé pour produire un matériau non-tissé (150) à partir de fibres de verre (116) soumises à une torsion par des changements aléatoires du mouvement de rotation dans le sens de leur longueur, comportant les étapes de :
production d'une pièce (148) de laine de fibres de verre ; et
d'aiguilletage (130) de la laine de fibres de verre (148).

2. Procédé selon la revendication 1, dans lequel la pièce de laine (148) est produite par fibrage rotatif.

3. Procédé selon la revendication 2, dans lequel la pièce (148) est produite par une méthode de façonnage directe, dans laquelle les fibres (116) produites par fibrage rotatif sont captées suivant une relation globalement en spirale et cette orientation est maintenue pendant la collecte des fibres (116).

4. Procédé selon la revendication 3 dans lequel la pièce de laine (148) est produite en étirant les fibres collectées orientées en spirale en un cordon (170).

5. Procédé selon l'une des revendications 1 à 4, dans lequel les fibres de verre (116) comportent au moins deux composants de verre distincts.

6. Procédé selon la revendication 5, dans lequel les fibres de verre (116) sont des fibres de verre à deux composants, non mélangées.

7. Procédé selon l'une des revendications 1 à 6, dans lequel la laine de fibres de verre est chauffée et les fibres de verre (116) sont ensuite laissées à relaxer avant l'étape d'aiguilletage (130).

8. Procédé selon l'une des revendications 1 à 7, dans lequel l'aiguilletage (130) est effectué sur au moins la surface de la pièce de laine (148).

9. Procédé selon l'une des revendications 1 à 8, dans lequel avant d'être aiguilletée (130), la pièce de laine n'est pas soumise au cardage, au mélange avec d'autres fibres ou à l'addition de lubrifiant.

10. Procédé selon l'une des revendications 1 à 9, incluant en outre l'étape de traitement de la pièce de laine (148) avec un produit d'imprégnation (164) après l'aiguilletage (130).

11. Procédé selon la revendication 10, incluant en outre l'étape de liaison du matériau aiguilleté à un support flexible avant le traitement avec le produit d'imprégnation (164).

12. Procédé selon l'une des revendications 1 à 9, incluant en outre l'étape de traitement des fibres avec un absorbant après l'étape d'aiguilletage (130).

13. Procédé selon l'une des revendications 1 à 9, incluant en outre l'étape de combinaison des fibres avec une charge après l'étape d'aiguilletage (130).

14. Procédé selon l'une des revendication 1 à 13, dans lequel la pièce de laine est une nappe de fibres de verre (116) soumises à une torsion par des changements aléatoires du mouvement de rotation dans le sens de leur longueur.

15. Procédé selon l'une des revendications 1 à 14, incluant en outre l'étape de coupe ou de broyage (136) du matériau aiguilleté pour produire des plaques (152).

16. Procédé selon l'une des revendications 1 à 13, incluant en outre l'étape de tranchage (140) de la pièce de laine (148) pour former des groupes séparés de fibres de verre (116).

17. Procédé selon la revendication 16, dans lequel les groupes de fibres (116) sont mouillés, déposés et séchés pour produire un matelas (154) de fibres (116) soumises à une torsion par des changements aléatoires du mouvement de rotation dans le sens de leur longueur.

18. Procédé selon la revendication 17, incluant en outre l'étape de tissage d'au moins l'une des surfaces du matelas (154).

19. Procédé selon la revendication 15 ou la revendication 16, incluant en outre l'étape d'application d'un traitement de surface pour ajouter de l'aire de surface aux fibres (116).

20. Matériau non-tissé (150) comprenant une laine aiguilletée contenant des fibres de verre (116) soumises à une torsion par des changements aléatoires du mouvement de rotation dans le sens de leur longueur, produit conformément à l'une des revendications 1 à 17.
